(19) Europäisches Patentamt
European Patent Office
Office européen des brevets

(11) **EP 2 399 709 B1**

(12) **FASCICULE DE BREVET EUROPEEN**

(45) Date de publication et mention
de la délivrance du brevet:
**12.12.2012 Bulletin 2012/50**

(51) Int Cl.:
***B24B 9/14*** *(2006.01)*     ***B24B 47/22*** *(2006.01)*
***G02C 13/00*** *(2006.01)*

(21) Numéro de dépôt: **11290256.4**

(22) Date de dépôt: **06.06.2011**

(54) **Procédé de calcul prédictif d'une géométrie simulée d'une nervure d'engagement à ménager sur le chant d'une lentille ophtalmique d'une paire de lunettes et méthode de biseautage**

Rechnerisches Simulationsverfahren zur Gestaltung einer peripheren Fassungsrippe auf der Kante eines Brillenglases und Verfahren des Facettierens

Process for the calculation and simulation of a peripheral mounting rib on the edge of a spectacle lens and bevelling process

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2010 FR 1002646**

(43) Date de publication de la demande:
**28.12.2011 Bulletin 2011/52**

(73) Titulaire: **ESSILOR INTERNATIONAL (Compagnie Générale d'Optique) 94220 Charenton le Pont (FR)**

(72) Inventeurs:
• **Dubois, Frédéric**
  **94220 Charenton Le Pont (FR)**
• **Belloni, Eric**
  **94220 Charenton Le Pont (FR)**
• **Freson, David**
  **94220 Charenton Le Pont (FR)**
• **Kot, Richard**
  **94220 Charenton Le Pont (FR)**

(74) Mandataire: **Chauvin, Vincent et al Coralis 14/16, rue Ballu 75009 Paris (FR)**

(56) Documents cités:
  **FR-A1- 2 893 524**     **FR-A1- 2 912 335**
  **FR-A1- 2 926 898**

EP 2 399 709 B1

**Description**

La présente invention concerne de manière générale le montage de lentilles ophtalmiques sur une monture de lunettes d'une paire de lunettes correctrices.

L'invention s'applique plus particulièrement aux lentilles ophtalmiques qui sont fortement cambrées et/ou qui sont destinées à être détourées suivant un contour présentant des zones sensiblement rectilignes.

ARRIÈRE-PLAN TECHNOLOGIQUE

Une monture comporte habituellement deux cercles (ou « entourages »), présentant chacun un drageoir intérieur formant une rainure.

Le détourage d'une lentille ophtalmique en vue de son montage dans le cercle correspondant de la monture de lunettes sélectionnée consiste alors à modifier le contour de la lentille pour l'adapter à la forme de ce cercle.

Ce détourage se décompose en deux opérations dites de débordage pour la mise en forme de la périphérie de la lentille, et de biseautage pour la mise en place d'une nervure d'emboîtement sur la périphérie de la lentille, à engager dans le drageoir du cercle correspondant de la monture de lunettes.

L'opération de débordage consiste à éliminer la partie périphérique superflue de la lentille ophtalmique concernée, pour en ramener le contour, qui est le plus souvent initialement circulaire, à un contour de forme proche de celle du contour du cercle correspondant de la monture de lunettes.

L'opération de biseautage consiste quant à elle à assurer la formation d'une nervure d'emboîtement (ou « biseau » car en général de section transversale triangulaire) le long du chant de la lentille ophtalmique. Cette nervure d'emboîtement est destinée à être engagée dans le drageoir ménagé le long de la face intérieure du cercle correspondant de la monture de lunettes, pour maintenir rigidement la lentille ophtalmique dans ce cercle.

Classiquement, ces opérations de débordage et de biseautage sont effectuées par une machine à meuler, appelée meuleuse, qui possède des moyens de blocage et d'entraînement en rotation de la lentille ainsi qu'une meule de débordage et une meule de biseautage montées rotatives pour usiner cette lentille. La meule de biseautage présente généralement une forme globalement cylindrique, avec à mi-longueur une gorge de biseautage permettant de générer le biseau sur le chant de la lentille.

A l'issue de l'opération de biseautage, on observe sur certaines lentilles, en particulier les lentilles fortement cambrées et les lentilles détourées suivant un contour présentant une zone sensiblement rectiligne, un phénomène d'amincissement du biseau. Ce phénomène d'amincissement du biseau pénalise la qualité et la précision du montage de la lentille dans sa monture.

Ce phénomène, communément appelé « rognage du biseau », s'explique ainsi. La meule de biseautage présente un rayon important. De ce fait, lors de l'opération de biseautage, l'arc de la meule de biseautage qui est engagé dans la matière de la lentille est étendu. Par conséquent, lorsque la meule de biseautage usine le chant de la lentille en une section transversale donnée de cette lentille, elle usine également, de manière involontaire, une partie du chant de la lentille située en avant de cette section transversale et une autre partie du chant de la lentille située en arrière de cette section transversale. On observe alors une première interférence entre la meule de biseautage et la portion de biseau déjà réalisée, et une seconde interférence entre la meule de biseautage et la portion de biseau qui reste à réaliser. Ces interférences génèrent ainsi ce phénomène d'amincissement du biseau.

Pour minimiser ce phénomène, une solution a été envisagée dans le document FR 2 893 524. Cette solution consiste à modifier une meuleuse classique, comportant une meulette de biseautage montée rotative autour d'un premier axe, afin d'ajouter une liberté de mouvement supplémentaire à cette meulette. La meulette est plus précisément montée pivotante autour d'un second axe orthogonal au premier axe, ce qui permet de l'orienter de telle sorte qu'elle suive la courbure de la tranche de la lentille, de manière à réduire le rognage du biseau. Une telle meuleuse est toutefois particulièrement onéreuse à fabriquer.

OBJET DE L'INVENTION

Le but de la présente invention consiste plutôt à déterminer l'ampleur du rognage du biseau avant même que ne commence l'usinage de la lentille ophtalmique.

A cet effet, on propose selon l'invention un procédé de calcul prédictif tel que défini dans la revendication 1.

Ainsi, selon l'invention, on procède à une estimation de la forme finale que présentera la section considérée de la nervure d'emboîtement de la lentille ophtalmique après le détourage de la lentille ophtalmique suivant la consigne de déplacement initiale, en déterminant l'effet que la meule de biseautage aura sur cette section transversale considérée lorsqu'elle usinera une autre section transversale de la nervure d'emboîtement, voisine de la section transversale considérée.

Grâce à l'invention, il est ainsi possible de prévoir à l'avance la forme que présentera la nervure d'emboîtement une fois la lentille ophtalmique détourée suivant la consigne de déplacement initiale. On pourra alors présumer de la qualité du montage de la lentille ophtalmique dans le cercle correspondant de la monture de lunettes, avant même le commencement des opérations de détourage de la lentille ophtalmique.

D'autres caractéristiques avantageuses et non limitatives du procédé de calcul prédictif sont définies dans les revendications 2 à 9.

L'invention concerne également une méthode de biseautage telle que définie dans les revendications 10 et suivantes.

DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :

- la figure 1 est une vue schématique en perspective d'une lentille ophtalmique à biseauter en vue de son montage dans un cercle d'une monture de lunettes ;
- la figure 2 est une vue schématique en perspective d'un secteur angulaire de la lentille ophtalmique de la figure 1 après qu'elle a été biseautée ;
- la figure 3 est une vue schématique en perspective d'une meuleuse comportant une meule de biseautage adaptée à former une nervure d'emboîtement sur le chant de la lentille ophtalmique de la figure 1 ;
- les figures 4 et 5 sont des vues schématiques en perspective et en plan illustrant le phénomène de rognage de la nervure d'emboîtement lors du biseautage de la lentille ophtalmique de la figure 1 ;
- la figure 6 est une vue schématique illustrant la géométrie finale d'une section transversale de la nervure d'engagement, déterminée à partir de l'intersection entre deux approximations de la géométrie de cette nervure d'engagement déduites de la forme et de la position de la meule de biseautage par rapport à la lentille ophtalmique lorsqu'elle usine deux sections transversales différentes de la nervure d'emboîtement ;
- la figure 7 est une vue en plan du contour selon lequel la lentille ophtalmique doit être détourée ;
- la figure 8 est une vue du détail de la zone VIII de la figure 7 ; et
- la figure 9 est une vue schématique en plan illustrant le déplacement de la meule de biseautage le long du chant de la lentille ophtalmique pour former la nervure d'emboîtement.

La lentille ophtalmique

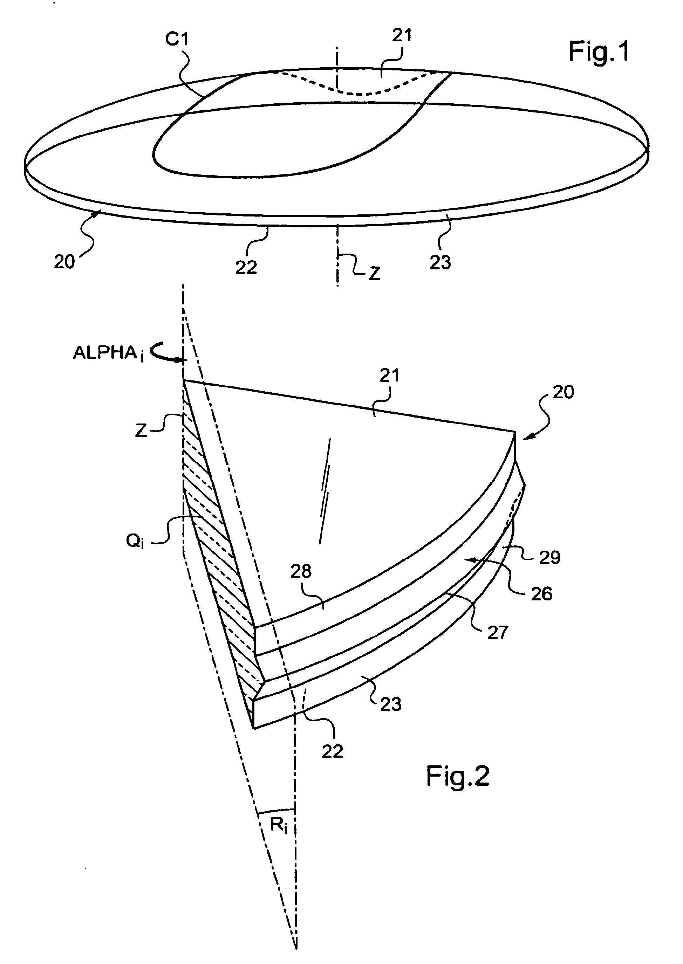

Sur la figure 1, on a représenté une lentille ophtalmique 20 telle qu'elle se présente à l'opticien lorsqu'elle lui est fournie par un fabricant de lentilles.

Cette lentille ophtalmique 20 présente deux faces optiques avant 21 et arrière 22, et une tranche 23. Comme le montre la figure 1, la tranche 23 de la lentille présente un contour initial circulaire. La lentille ophtalmique 20 est toutefois destinée à être détourée suivant un contour C1 de forme déterminée afin de pouvoir s'emboîter dans le cercle correspondant de la monture de lunettes sélectionnée par le futur porteur de lunettes.

Ce contour C1, dont la géométrie est donc déterminée en fonction de la forme du cercle de la monture de lunettes sélectionnée, est positionné sur la lentille au cours d'une opération de centrage qui consiste à déterminer la position qu'occupera chaque lentille sur la monture afin d'être convenablement centrée en regard de la pupille de l'oeil du porteur de manière à ce qu'elle exerce convenablement la fonction optique pour laquelle elle a été conçue. Cette opération de centrage, bien connu de l'homme du métier, ne sera pas ici décrite en détail.

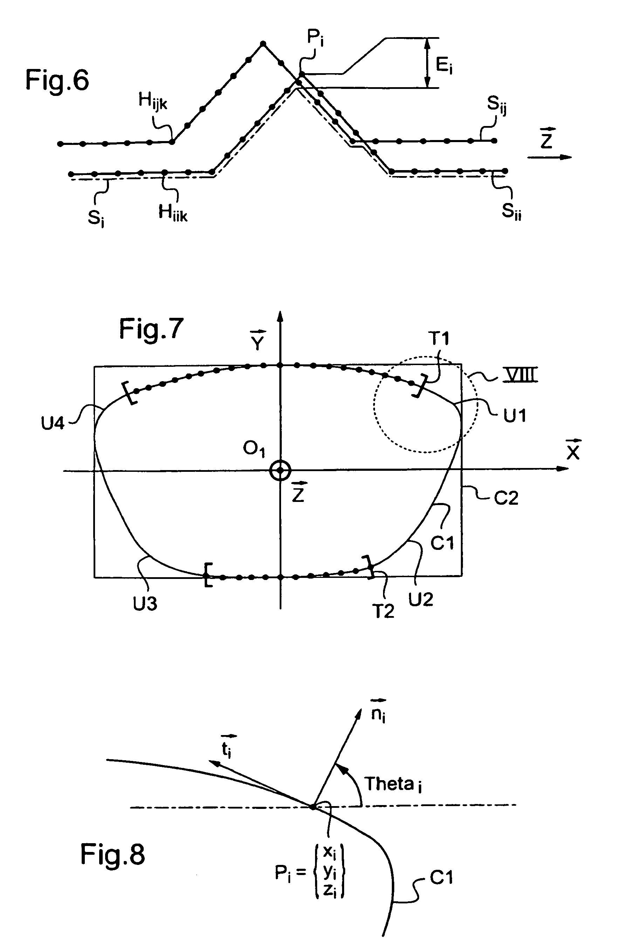

On a représenté sur la figure 7 une projection en plan de ce contour C1. Sur cette figure, on a par ailleurs représenté le cadre boxing C2 de ce contour C1, c'est-à-dire le cadre rectangulaire dans lequel est inscrit le contour C1 et dont deux des côtés sont parallèles à l'axe horizontal de la lentille ophtalmique 20.

Sur cette figure 7, on a également représenté un repère orthonormé, appelé repère boxing $(O_1, X, Y, Z)$, qui a pour origine le centre $O_1$, du cadre boxing, pour axe X un axe parallèle à l'axe horizontal de la lentille ophtalmique et pour axe Z l'axe qui passe par le centre $O_1$, du cadre boxing et qui est normal à la face optique avant 21 de la lentille ophtalmique 20. Cet axe Z sera ici appelé axe central Z de la lentille ophtalmique 20.

Comme cela sera décrit plus en détail dans la suite de cet exposé, le détourage de la lentille ophtalmique 20 suivant ce contour C1 se décompose en deux opérations, dont une opération de débordage pour éliminer la partie périphérique superflue de la lentille ophtalmique 20 afin de ramener son contour à une forme proche de celle du contour C1, et une opération de biseautage pour assurer la formation d'une nervure le long de la tranche 23 de la lentille ophtalmique 20.

Comme le montre la figure 2, une fois détourée, la lentille ophtalmique 20 présente ainsi une nervure dite d'emboîtement 26 (ou « biseau ») bordée de deux rebords avant 28 et arrière 29 (ou « pieds de biseau »). La nervure d'engagement 26 présente ici une section en forme de V, avec une arête de sommet 27 qui court le long de la tranche 23 de la lentille suivant le contour C1, et, de part et d'autre de cette arête de sommet 27, deux flancs avant et arrière.

Cette nervure d'emboîtement est ainsi destinée à être engagée dans un drageoir ménagé le long de la face intérieure du cercle correspondant de la monture de lunettes afin de maintenir rigidement la lentille ophtalmique dans ce cercle:

On définit ici la section transversale $Q_i$ de la lentille ophtalmique 20 comme l'intersection de cette lentille avec un demi-plan $R_i$ qui est délimité par l'axe central Z de la lentille et qui présente une orientation $ALPHA_i$ déterminée autour de cet axe central Z.

Chaque section transversale $Q_i$ de la lentille ophtalmique 20 définit ainsi un profil particulier de la tranche 23 de cette lentille ophtalmique. Tel que représenté sur la figure 2, ce profil comprend ici deux segments parallèles correspondant aux traces des rebords avant 28 et arrière 29 de la nervure d'emboîtement 26 dans le demi-plan $R_i$, et deux segments en V correspondant aux traces des flancs avant et arrière de la nervure d'emboîtement 26 dans ce demi-plan $R_i$.

Le dispositif de détourage

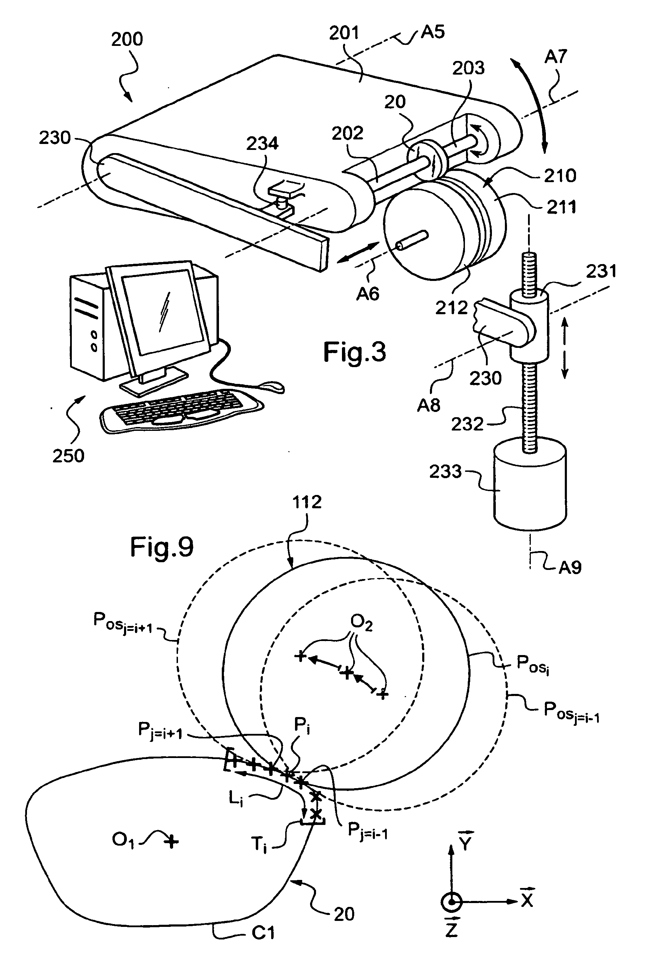

Pour détourer cette lentille ophtalmique 20, on utilise ici un appareil de détourage tel que schématisé sur la figure 3.

Dans un premier mode de réalisation représenté sur la figure 3, l'appareil de détourage est constitué, de manière connue en soi, par une meuleuse 200 automatique, communément dite numérique. Cette meuleuse comporte en l'espèce :

- une bascule 201 qui est montée librement pivotante autour d'un axe de référence A5, en pratique un axe horizontal, sur un châssis non représenté, et qui supporte la lentille ophtalmique 20 à usiner ; et
- un train de meules 210, qui est calé en rotation sur un axe de meule A6 parallèle à l'axe de référence A5, et qui est lui aussi dûment entraîné en rotation par un moteur non représenté.

La bascule 201 est équipée d'un support de lentilles ici formé par deux arbres de serrage et d'entraînement en rotation 202, 203 de la lentille ophtalmique 20 à détourer. Ces deux arbres 202, 203 sont alignés l'un avec l'autre suivant un axe de blocage A7 parallèle à l'axe de référence A5. Chacun des arbres 202, 203 possède une extrémité libre qui fait face à l'autre et qui est équipée d'un nez de blocage de la lentille ophtalmique 20. Un premier des deux arbres 202 est fixe en translation suivant l'axe de blocage A7. Le second des deux arbres 203 est au contraire mobile en translation suivant l'axe de blocage A7 pour réaliser le serrage en compression axiale de la lentille ophtalmique 20 entre les deux nez de blocage. Ces deux arbres sont agencés pour bloquer la lentille ophtalmique 20 de telle sorte que l'axe central Z de cette lentille se confonde avec l'axe de blocage A7.

Le train de meules 210 comporte quant à lui, pour l'ébauche de la lentille, une meule d'ébauche 211 cylindrique de révolution autour de l'axe de meule A6, et, pour le biseautage de la lentille, une meule de forme 212 accolée à la meule d'ébauche 211.

Comme le montrent les figures 3 à 5, cette meule forme, appelée meule de biseautage 212, présente une face de travail globalement cylindrique de révolution autour de l'axe de meule A6, avec toutefois une gorge de biseautage 213 centrale de section triangulaire pour former la nervure d'emboîtement 26 sur la tranche 23 de la lentille ophtalmique 20.

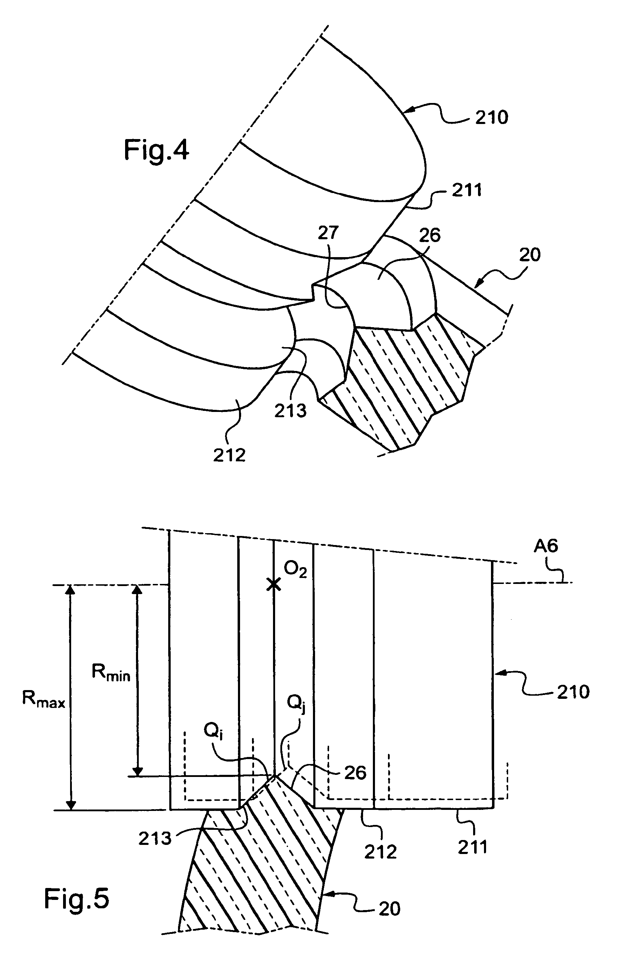

Cette meule de biseautage 212 présente donc un rayon r(z) qui est constant de part et d'autre de la gorge de biseautage 213, et qui varie au niveau de la gorge de biseautage 213. Ce rayon r(z) est égal à un rayon maximum $R_{max}$ de part et d'autre de la gorge de biseautage 213 et est égal à un rayon minimum $R_{min}$ au niveau du fond de la gorge de biseautage 213 (voir figure 5). On considérera dans la suite de cet exposé que le centre $O_2$ de la meule de biseautage 212 est le point d'intersection entre l'axe de meule A6 et le plan contenant l'arête de fond de la gorge de biseautage 213 de la meule de biseautage 212.

Comme le montre la figure 3, le train de meules 210 est porté par un chariot (non représenté) monté mobile en translation suivant l'axe de meule A6, pour autoriser un déplacement axial de la meule de biseautage 212 par rapport à la tranche 23 de la lentille ophtalmique 20.

La meuleuse 200 comporte, en outre, une biellette 230 dont une extrémité est articulée par rapport au châssis pour pivoter autour de l'axe de référence A5, et dont l'autre extrémité est articulée par rapport à une noix 231 pour pivoter autour d'un axe A8 parallèle à l'axe de référence A5. La noix 231 est elle-même montée mobile en translation suivant un axe de restitution A9 perpendiculaire à l'axe de référence A5. Telle que schématisée sur la figure 3, la noix 231 est une noix taraudée en prise à vissage avec une tige filetée 232 qui, alignée suivant l'axe de restitution A9, est entraînée en rotation par un moteur 233.

La biellette 230 comporte par ailleurs une butée équipée d'un capteur de contact 234 qui interagit avec un élément correspondant de la bascule 201. Par gravité, la biellette 230 permet ainsi de commander l'entr'axe entre l'axe de blocage A7 de la lentille ophtalmique 20 et l'axe de meule A6, et autorise ainsi un déplacement transversal de la lentille ophtalmique 20 par rapport à la meule de biseautage. Plus précisément, lorsque, dûment enserrée entre les deux arbres 202, 203, la lentille ophtalmique 20 à détourer est amenée au contact de l'une des meules 211, 212, elle fait l'objet d'un enlèvement effectif de matière jusqu'à ce que la bascule 201 arrive en butée contre la biellette 230 suivant un appui qui, se faisant au niveau du capteur de contact 234, est dûment détecté par celui-ci.

Pour le biseautage de la lentille ophtalmique 20 suivant le contour C1, il suffit donc :

- de déplacer le train de meules suivant l'axe de meule A6 pour, d'une part, sélectionner la meule de biseautage 212 en la plaçant en regard de la tranche 23 de la lentille ophtalmique 20, et pour, d'autre part, garder constamment la gorge de biseautage 213 de la meule de biseautage 212 en une position désirée par rapport à la tranche 23 de la lentille ophtalmique 20 (par exemple à mi-largeur de la tranche 23) ;
- de déplacer en conséquence la noix 231 le long de l'axe de restitution A9 pour enlever la matière nécessaire à la formation de la nervure d'emboîtement 26 sur la tranche 23 de la lentille ophtalmique 20 ; et
- de faire pivoter conjointement les arbres de support 202, 203 autour de l'axe de blocage A7 pour former cette nervure d'emboîtement 26 le long de l'ensemble de la tranche 23 de la lentille ophtalmique 20.

Ces différents mouvements sont pilotés en coordination par une unité de calcul et de pilotage 250, dûment programmée à cet effet, pour que tous les points du contour de la lentille ophtalmique 20 soient successivement ramenés au bon diamètre. Telle que représentée sur la figure 3, l'unité de calcul et de pilotage est implémentée sur un ordinateur de bureau. Bien sûr, en variante, la partie logicielle de la meuleuse pourrait être implémentée directement sur un circuit électronique de la meuleuse.

En variante, on pourra prévoir d'utiliser un appareil de détourage présentant une architecture différente.

En particulier, dans un second mode de réalisation de l'invention non représenté sur les figures, on pourra utiliser une meuleuse automatique dépourvue de meule de forme. Une telle meuleuse automatique comportera alors, en lieu et place de cette meule de forme, une meule à double face de travail telle que celle représentée sur la figure 5 du document de brevet FR 2 926 896. Une telle meule à double face de travail présente une partie centrale cylindrique de révolution autour de son axe de rotation, et, de part et d'autre de cette partie centrale, deux parties d'extrémité tronconiques de révolution autour de cet axe de rotation, pointant dans des directions opposées. Ces deux parties d'extrémité sont ainsi agencées pour usiner successivement les deux flancs de la nervure d'emboîtement de la lentille ophtalmique, suivant une procédé exposé en détail dans le document de brevet précité.

Le phénomène de rognage

Comme le montrent plus particulièrement les figures 4 et 5, lorsque les arbres de blocage 202, 203 du premier mode de réalisation de la meuleuse 200 pivotent pour permettre le biseautage de l'ensemble de la tranche 23 de la lentille ophtalmique 20, il se produit un phénomène de rognage non désiré de la nervure d'emboîtement 26.

Comme le montre plus précisément la figure 4, lorsque la meule de biseautage 212 est positionnée pour biseauter une section transversale $Q_i$ donnée de la lentille ophtalmique 20, un arc entier de sa tranche est engagé dans la matière de la lentille ophtalmique 20. Par conséquent, la meule de biseautage 212 ne se contente pas d'usiner ladite section transversale $Q_i$ de la lentille, mais elle usine également la lentille de part et d'autre de cette section transversale $Q_i$.

De ce fait, comme le montre la figure 5, lorsque la meule de biseautage 212 se déplace depuis une première section transversale $Q_i$ de la nervure d'engagement 26 de la lentille ophtalmique 20 vers une autre section transversale $Q_j$, elle n'arrête pas pour autant d'usiner la première section transversale $Q_i$ de la nervure d'engagement 26.

Comme le montre la figure 6, on constate alors, après le passage de la meule de biseautage, que la géométrie finale $S_i$ de la section transversale $Q_i$ de la nervure d'emboîtement 26 ne correspond pas à la géométrie $S_{ii}$ espérée, mais que la nervure d'emboîtement 26 présente au contraire une largeur et une hauteur réduites pouvant provoquer des problèmes de tenue de la lentille ophtalmique 20 dans le cercle correspondant de la monture de lunettes sélectionnée.

L'ampleur du phénomène de rognage de la nervure d'emboîtement 26 varie alors en fonction de trois facteurs.

Le premier de ces facteurs est la courbure de la lentille ophtalmique 20, également appelée « base du verre ». En effet, plus le rayon de courbure de la face optique avant 21 de la lentille ophtalmique 20 est réduit, plus les variations de position axiale (suivant l'axe Z) de la meule de biseautage 112 devront être importantes pour que la gorge de biseautage 113 de cette meule suive la tranche 23 de la lentille ophtalmique 20, et plus la meule de biseautage 112 aura donc tendance à rogner de manière non désirée la nervure d'emboîtement 26.

Le second de ces facteurs est la forme du contour C1. En effet, plus ce contour sera rond, moins l'arc de la meule de biseautage 112 engagé dans la lentille ophtalmique sera important, et moins la meule de biseautage aura donc tendance à rogner de manière non désirée la nervure d'emboîtement 26. Au contraire, plus une partie de ce contour C1 sera rectiligne, plus la meule de biseautage 112 aura tendance à rogner de manière non désirée la nervure d'emboîtement 26.

Le troisième de ces facteurs est le diamètre de la meule de biseautage 112. En effet plus ce diamètre sera grand, plus l'arc de la meule de biseautage 112 engagé dans la lentille ophtalmique sera important, et plus la meule de biseautage aura donc tendance à rogner de manière non désirée la nervure d'emboîtement 26.

On notera par ailleurs que le phénomène de rognage apparaît de la même manière lorsque la lentille ophtalmique est biseautée à l'aide de la meule à double face de travail du second mode de réalisation de la meuleuse.

Le procédé de calcul prédictif

La présente invention consiste alors en un procédé de calcul prédictif de la géométrie simulée S d'une partie au moins de la nervure d'engagement 26, c'est-à-dire en un procédé de calcul prédictif d'une approximation de la géométrie que présenterait cette partie de la nervure d'engagement 26 si la meuleuse 200 était pilotée pour biseauter la lentille ophtalmique 20 en suivant une consigne de pilotage directement déduite du contour C1.

Comme cela sera décrit plus en détail dans la suite de cet exposé, le procédé de calcul prédictif est ici globalement mis en oeuvre en réalisant un calcul prédictif de la géométrie simulée $S_i$ d'une section transversale considérée $Q_i$ de la nervure d'engagement 26, puis en répétant ce calcul en d'autres sections transversales de la nervure d'engagement 26, et enfin en en déduisant une approximation de la géométrie de la partie correspondante de la nervure d'engagement 26.

Ce procédé de calcul prédictif se décompose en sept étapes principales.

Etape n°1

Au cours d'une première étape, l'unité de calcul et de pilotage 250 de la meuleuse 200 obtient une consigne de déplacement initiale CONS1, qui permet de générer la consigne de pilotage des différents moteurs de la meuleuse 200 afin que la meule de biseautage 212 puisse former la nervure d'engagement 26 le long de la tranche 23 de la lentille ophtalmique 20.

Cette consigne de déplacement initiale CONS1 peut être obtenue de diverses manières.

Elle peut tout d'abord être obtenue par une simple recherche, dans un registre d'une base de données, d'un enregistrement qui est associé à la référence de la monture de lunettes sélectionnée et qui mémorise la consigne de déplacement initiale CONS1. Un registre de base de données régulièrement mis à jour est toutefois nécessaire.

Plus classiquement, cette consigne de déplacement initiale CONS1 pourra être obtenue en acquérant la géométrie tridimensionnelle du fond du drageoir du cercle correspondant de la monture de lunettes, et en calculant la consigne de déplacement initiale CONS1 en fonction de cette géométrie tridimensionnelle.

L'opération d'acquisition de la géométrie tridimensionnelle du fond du drageoir pourra ici être réalisée en palpant le fond du drageoir du cercle correspondant de la monture de lunettes à l'aide d'un lecteur classique, tel que celui décrit dans le brevet EP 0 750 172 ou commercialisé par Essilor International sous la marque Kappa ou sous la marque Kappa CT.

A l'issue de cette opération de palpage, l'unité de calcul et de pilotage 250 aura ainsi acquis les coordonnées tridimensionnelles d'une pluralité de points caractérisant la géométrie du contour du fond du drageoir. Elle pourra alors déterminer les coordonnées tridimensionnelles $(x_i, y_i, z_i)$, exprimées dans le repère boxing $(O_1, X, Y, Z)$, d'une pluralité de points $P_i$ caractérisant la géométrie du contour C1 de l'arête de sommet 27 de la nervure d'emboîtement 26 à réaliser sur la tranche 23 de la lentille ophtalmique 20 (figures 7 et 8).

Le calcul de la consigne de déplacement initiale CONS1 consistera alors à déterminer la position que devra présenter la meule de biseautage 212 par rapport à la lentille ophtalmique 20 pour usiner la nervure d'emboîtement 26 de telle sorte que son arête de sommet 27 passe par chacun des points $P_i$.

Cette consigne de déplacement initiale CONS1 sera ici formulée sous la forme d'une pluralité de triplets correspondant aux coordonnées tridimensionnelles $(X_i, Y_i, Z_i)$ des points par lesquels le centre $O_2$ de la meule de biseautage 212 devra passer pour usiner la nervure d'emboîtement 26 de telle sorte que son arête de sommet 27 passe par chacun des points $P_i$.

Etant donné que pour biseauter la lentille ophtalmique 20, la surface de travail de la meule de biseautage 212 doit se déplacer tangentiellement au contour C1 (voir figure 9), les coordonnées tridimensionnelles $(X_i, Y_i, Z_i)$ du centre $O_2$ de la meule de biseautage 212 lorsqu'elle biseautera la lentille ophtalmique 20 au niveau du point $P_i$ seront alors les suivantes :

$$X_i = x_i + R_{min}.\cos(THETA_i)$$

$$Y_i = y_i + R_{min}.\sin(THETA_i)$$

$$Z_i = z_i,$$

avec $THETA_i$ l'angle formé entre l'axe horizontal X et la normale $n_i$ au contour C1 au niveau du point $P_i$ (voir figure 8), et $R_{min}$ le rayon minimum de la meule de biseautage 212 (voir figure 5).

Ces triplets définissent ainsi la trajectoire que la meule de biseautage 212 devra suivre pour biseauter la lentille ophtalmique, cette trajectoire étant exprimée dans le repère boxing, c'est-à-dire dans le référentiel de la lentille ophtalmique.

Etape n°2

Au cours d'une seconde étape, l'unité de calcul et de pilotage 250 détermine une première approximation $S_{ii}$ de la géométrie de la section transversale considérée $Q_i$ de la nervure d'engagement 26 (voir figure 6).

Cette première approximation $S_{ii}$ est déduite de l'intersection entre la meule de biseautage 212 et la lentille ophtalmique 20 lorsque la meule de biseautage 212 est située en une première position $Pos_i$ le long de sa consigne de déplacement initiale CONS1.

Cette première position $Pos_i$ correspond ici à celle dans laquelle la meule de biseautage 212 est pilotée pour usiner la nervure d'emboîtement 26 de la lentille ophtalmique 20 au niveau du point $P_i$, c'est-à-dire à celle dans laquelle l'axe de meule A6 s'étend dans le demi-plan $R_i$ de la section transversale considérée $Q_i$.

Cette première approximation $S_{ii}$ de la géométrie de la section transversale considérée $Q_i$ de la nervure d'engagement 26 est réalisée en déterminant les coordonnées d'une pluralité de points $H_{iik}$ caractéristiques de cette géométrie. Ces points sont plus précisément ici situés sur la section transversale considérée $Q_i$ de la tranche 23 de la lentille ophtalmique 20, et sont régulièrement répartis suivant l'axe Z.

Etape n°3

Au cours d'une troisième étape, l'unité de calcul et de pilotage 250 détermine une seconde approximation $S_{ij}$ de la géométrie de la section transversale considérée $Q_i$ de la nervure d'engagement 26 (voir figure 6).

Contrairement à la première, cette seconde approximation $S_{ij}$ est déduite de l'intersection entre la meule de biseautage 212 et la lentille ophtalmique 20 lorsque la meule de biseautage 212 est située en une seconde position $Pos_j$ le long de sa consigne de déplacement initiale CONS1.

Cette seconde position $Pos_j$ correspond ici à celle dans laquelle la meule de biseautage 212 est pilotée pour usiner la nervure d'emboîtement 26 de la lentille ophtalmique 20 au niveau d'un point $P_j$, distinct et voisin du point $P_i$, c'est-à-dire à celle dans laquelle l'axe de meule A6 s'étend dans le demi-plan $R_j$ d'une section transversale $Q_j$ adjacente à la section transversale considérée $Q_i$.

Cette seconde approximation $S_{ij}$ de la géométrie de la section transversale considérée $Q_i$ de la nervure d'engagement 26 est réalisée en déterminant les coordonnées d'une pluralité de points $H_{ijk}$ caractéristiques de cette géométrie. Ces points sont plus précisément ici situés sur la section transversale considérée $Q_i$ de la tranche 23 de la lentille ophtalmique 20, et sont régulièrement répartis suivant l'axe Z.

Lors de ces seconde et troisième étapes, les coordonnées $(x''_i, y''_i, z''_i)$ de chacun des points $H_{ijk}$ (dont en particulier les points $H_{iik}$ lorsque i=j) sont déterminées en résolvant un système d'équation permettant de déterminer la position de la ligne d'intersection entre la meule de biseautage 212 et la lentille ophtalmique 20 dont le contour est initialement circulaire.

Puisque le point $H_{iik}$ considéré est situé sur la lentille ophtalmique, ses coordonnées peuvent s'exprimer sous la forme suivante :

$$x''_i(t) = x_i + t.\cos(THETA_i),$$

$$y''_i(t) = y_i + t.\sin(THETA_i),$$

$$z''_i = z_i + a_k.$$

L'équation du cercle qui appartient à la surface de travail de la meule de biseautage 212 et qui passe par le point $H_{iik}$ considéré s'exprime quant à elle ainsi :

$$(x''_i(t) - (x_j + R_{min}.cos(THETA_j)))^2 + (y''_i(t) - (y_j + R_{min}.sin(THETA_j)))^2 = r(z''_i)^2.$$

La résolution de ce système d'équation revient donc à résoudre une équation du second degré de la forme $A.t^2 + B.t + C = 0$, avec

$$A = 1,$$

$$B = 2.cos(THETA_i).(x_i - x_j - R_{min}.cos(THETA_j)) +$$
$$2.sin(THETA_i).(y_i - y_j - R_{min}.sin(THETA_j)),$$

$$C = x_i^2 - 2.x_i.x_j - 2.x_i.R_{min}.cos(THETA_j) + x_j^2 + R_{min}^2.cos(THETA_j)^2 +$$
$$2.x_j.R_{min}.cos(THETA_j) + y_i^2 - 2.y_i.y_j - 2.y_i.R_{min}.sin(THETA_j) + y_j^2 +$$
$$R_{min}^2.sin(THETA_j)^2 + 2.y_j.R_{min}.sin(THETA_j) - r(z''_i)^2.$$

La résolution de cette équation du second degré pourra alors fournir zéro, un ou deux résultats.
Si cette équation ne fournit aucun résultat, cela signifie que la meule de biseautage 212, lorsqu'elle est située au niveau de la seconde position $Pos_j$ le long de sa consigne de déplacement initiale CONS1, n'interfère pas avec la section transversale considérée $Q_i$ de la lentille ophtalmique 20.
Si cette équation fournit un ou deux résultats (auquel cas seul le plus petit des deux sera considéré), cela signifie que la meule de biseautage 212, lorsqu'elle est située au niveau de la seconde position $Pos_j$ le long de sa consigne de déplacement initiale CONS1, interfère avec la section transversale considérée $Q_i$ de la lentille ophtalmique 20 au point $H_{ijk}$.
En répétant ce calcul, on obtient ainsi les coordonnées $(x''_i, y''_i, z''_i)$ de chacun des points $H_{ijk}$ considérés.
L'unité de calcul et de pilotage 250 en déduit alors la seconde approximation $S_{ij}$ de la géométrie de la nervure d'emboîtement 26 au niveau de la section transversale $Q_i$ considérée.

Etape n°4

Afin d'obtenir une bonne estimation de la géométrie de la nervure d'engagement 26 au niveau de la section transversale considérée $Q_i$ après le biseautage complet de la lentille ophtalmique, il est préférable de répéter ce calcul d'approximation en d'autres sections transversales $Q_j$ voisines de la section transversale considérée $Q_i$.
Par conséquent, au cours d'une quatrième étape, l'unité de calcul et de pilotage 250 procède de la même manière qu'à la troisième étape pour déterminer d'autres approximations $S_{ij}$ de la géométrie de la section transversale considérée $Q_i$ de la nervure d'engagement 26.
Comme le montre la figure 9, ces seconde et autres sections transversales $Q_j$ voisines de la section transversale considérée $Q_i$ ne sont pas choisies aléatoirement, mais sont au contraire régulièrement réparties de part et d'autre de la section transversale considérée $Q_i$, à l'intérieur d'une portion de simulation $T_i$ du contour C1 qui est centrée sur le point $P_i$ de la section transversale considérée $Q_i$ et qui présente une longueur de simulation $L_i$ déterminée.
La longueur de simulation $L_i$ pourra être prédéterminée, et choisie inférieure à 20 millimètres en abscisse curviligne, par exemple égale à 15 millimètres.
En variante, on pourra également prévoir de déterminer cette longueur de simulation $L_i$ en fonction du rayon de la meule de détourage 212 et de la courbure du contour C1 au niveau du point $P_i$. On pourra en particulier prévoir d'allonger la longueur de simulation $L_i$ lorsque le rayon de courbure du contour C1 au niveau du point $P_i$ sera supérieur à une constante déduite du rayon de la meule de détourage 212, et de réduire la longueur de simulation $L_i$ lorsque le rayon de courbure du contour C1 au niveau du point $P_i$ sera inférieur à une autre constante également déduite du rayon de la meule de détourage 212.

Etape n°5

Au cours d'une cinquième étape, l'unité de calcul et de pilotage 250 détermine l'intersection desdites approximations $S_{ii}$, $S_{ij}$ de la géométrie de la section transversale considérée $Q_i$ de la nervure d'engagement 26, de manière à en déduire la géométrie simulée $S_i$ de cette section transversale considérée $Q_i$ de la nervure d'engagement 26.

Cette intersection est calculée en déterminant, pour chaque constante k utilisée, quel est le point $H_{iik}$, $H_{ijk}$ qui est le plus proche du centre boxing C1.

Comme le montre la figure 6 pour les première et seconde approximations $S_{ii}$, $S_{ij}$, on obtient ainsi la géométrie simulée $S_i$ de cette section transversale considérée $Q_i$ de la nervure d'engagement 26.

Etape n°6

Au cours d'une sixième étape, l'unité de calcul et de pilotage 250 répète le calcul exposé aux étapes 2 à 6 pour déterminer la géométrie simulée $S_j$ d'autres sections transversales considérées $Q_j$ de la nervure d'engagement 26, situées dans les tronçons d'intérêt T1, T2.

Les sections transversales considérées $Q_j$ d'un même tronçon d'intérêt T1, T2 sont préférentiellement choisies de manière à être écartées deux à deux d'un écart compris, en abscisse curviligne le long du contour C1, entre 2 et 20 millimètres.

Puis, à l'aide d'un calcul d'interpolation, l'unité de calcul et de pilotage 250 construit, à partir des géométries simulées $S_i$, $S_j$ des différentes sections transversales considérées $Q_i$, $Q_j$ de la nervure d'engagement 26, un modèle tridimensionnel représentatif de la géométrie simulée S de chaque tronçon d'intérêt T1, T2 de la nervure d'engagement 26.

Ce modèle tridimensionnel, qui a donc été calculé avant même le début du détourage de la lentille ophtalmique 20 par la meuleuse 200, peut alors être utilisé de diverses manières pour optimiser le détourage de la lentille ophtalmique afin de permettre une meilleure tenue de la lentille ophtalmique dans le cercle de la monture de lunettes sélectionnée.

Etape n°7a

Une première utilisation de ce modèle, qui s'applique plus particulièrement au premier mode de réalisation de la meuleuse représenté sur la figure 3, consiste à corriger la consigne de déplacement initiale CONS1 de la meule de biseautage 212 en fonction de ce modèle tridimensionnel de manière à obtenir une consigne de déplacement corrigée CONS2 qui permette de compenser la réduction de hauteur de la nervure d'engagement 26 du fait de son rognage non désiré.

Pour obtenir la consigne de déplacement corrigée CONS2, l'unité de calcul et de pilotage 250 calcule, en chaque section transversale considérée $Q_i$, l'écart $E_i$ (voir figure 6) entre la hauteur du modèle tridimensionnel de la nervure d'engagement 26 et la hauteur espérée pour cette nervure (qui correspond à la profondeur de la gorge de biseautage). Elle corrige ensuite, en fonction de cet écart $E_i$, la consigne de déplacement initiale CONS1.

A titre d'exemple, si l'unité de calcul et de pilotage 250 constate un écart $E_i$ donné en une section transversale donnée $Q_i$ de la nervure d'engagement 26, elle peut corriger la consigne de déplacement initiale CONS1 de telle manière que la lentille ophtalmique soit biseautée au niveau de cette section transversale donnée $Q_i$ suivant un contour C2 écarté du contour C1 d'une distance radiale comprise entre la moitié et la totalité de l'écart $E_i$.

En pilotant alors le déplacement de la meule de biseautage 212 relativement à la lentille ophtalmique 20 en suivant cette consigne de déplacement corrigée CONS2, on obtient ainsi une lentille ophtalmique dont la nervure d'engagement assure une meilleure tenue de cette lentille dans le cercle de la monture de lunettes sélectionnée.

En variante, pour obtenir la consigne de déplacement corrigée CONS2, l'unité de calcul et de pilotage 250 pourra procéder autrement, par exemple en :

- acquérant une modélisation géométrique tridimensionnelle du drageoir du cercle de la monture de lunettes sélectionnée, puis en
- calculant, en chaque section transversale $Q_i$ de la nervure d'engagement 26, une augmentation de rayon autour de l'axe central Z de la lentille ophtalmique 20 devant être appliquée à la géométrie simulée S de la nervure d'engagement 26 pour que cette géométrie simulée S ainsi corrigée soit sensiblement tangente au drageoir de la monture de lunettes, et enfin en
- corrigeant, en fonction de cette augmentation de diamètre, la consigne de déplacement initiale CONS1.

Etape n°7b

Une seconde utilisation du modèle tridimensionnel des tronçons d'intérêt de la nervure d'engagement, qui s'applique plus particulièrement au second mode de réalisation de la meuleuse, consiste à corriger la consigne de déplacement initiale de la meule à double face de travail de manière à obtenir une consigne de déplacement corrigée qui permette de compenser la déformation de la section de la nervure d'engagement du fait de son rognage non désiré.

Pour obtenir la consigne de déplacement corrigée, l'unité de calcul et de pilotage calcule en chaque section transversale considérée, d'une part, l'écart entre la hauteur du modèle tridimensionnel de la nervure d'engagement et la hauteur espérée pour cette nervure, et, d'autre part, l'écart entre la largeur du modèle tridimensionnel de la nervure d'engagement et la largeur espérée pour cette nervure. Elle corrige ensuite, en fonction de ces deux écarts, la consigne de déplacement initiale.

A titre d'exemple, considérons le cas où l'unité de calcul et de pilotage constate un écart de hauteur et un écart de largeur en une section transversale donnée de la nervure d'engagement. Alors, elle corrige la consigne de déplacement initiale de telle manière que chaque flanc de la nervure d'emboîtement de la lentille ophtalmique soit biseauté au niveau de cette section transversale donnée suivant un contour qui est écarté du contour initialement prévu d'une distance radiale égale à l'écart de hauteur constaté et d'une distance axiale égale à la moitié de l'écart de largeur constaté.

Etape n°7c

Une troisième utilisation possible du modèle tridimensionnel des tronçons d'intérêt T1, T2 de la nervure d'engagement 26 consiste plus simplement à refuser ou à accepter le biseautage de la lentille ophtalmique 20 avec la meule de biseautage 212 et sa consigne de déplacement initiale CONS1, suivant qu'on estime que le phénomène de rognage risque ou non de nuire à la tenue de la lentille dans son cercle.

L'unité de calcul et de pilotage 250 procède à cet effet en :

- calculant, pour au moins une section transversale $Q_i$ de la nervure d'engagement 26 et préférentiellement pour chaque section transversale considérée, un écart ou un rapport entre l'aire de la première approximation $S_{ii}$ de la géométrie de la section transversale considérée $Q_i$ de la nervure d'emboîtement 26 et l'aire de la géométrie simulée $S_i$ de la section transversale considérée $Q_i$, puis en
- comparant cet écart ou ce rapport avec une valeur seuil, et enfin en
- refusant ou acceptant le biseautage de la lentille ophtalmique en fonction du résultat de cette comparaison.

A titre d'exemple illustratif, on pourra prévoir de déterminer le rapport entre lesdites aires en chaque section transversale considérée Q;, de calculer une moyenne de ce rapport sur l'ensemble des sections transversales considérées, puis d'accepter le biseautage si cette valeur moyenne est supérieure à 50 % ou de le refuser si elle est inférieure à 50 %.

Alors, si le biseautage est accepté, la meule de biseautage 212 est pilotée suivant la consigne de déplacement initiale CONS1 pour finir de détourer la lentille ophtalmique 20.

En revanche, si le biseautage est refusé, l'unité de calcul et de pilotage 250 suspend les opérations d'usinage de la lentille ophtalmique 20.

Elle peut alors procéder de diverses manières.

Elle peut par exemple, si la meuleuse 200 dispose d'un second outil de biseautage de diamètre inférieur au diamètre de la meule de biseautage 212, piloter le biseautage de la lentille ophtalmique 20 au moyen de ce second outil.

Elle peut en variante se contenter d'afficher un message d'erreur signifiant à l'opticien que la lentille ne peut pas être détourée par la meuleuse 200. Confronté à un tel message d'erreur, l'opticien pourra alors soit commander une nouvelle lentille ophtalmique présentant une base de verre moindre, de manière que la lentille soit moins sensible au rognage de sa nervure d'emboîtement, soit utiliser une autre meuleuse 200 apte à détourer la lentille ophtalmique.

Une telle autre meuleuse pourrait à cet effet comporter une meule de biseautage de diamètre moindre ou une meule de biseautage présentant un degré de liberté de mouvement supplémentaire lui permettant de s'incliner de manière à suivre la courbure de la tranche 23 de la lentille ophtalmique 20.

La présente invention n'est nullement limitée aux modes de réalisation décrits et représentés, mais l'homme du métier saura y apporter toute variante conforme à son esprit.

En particulier, on pourra prévoir de réaliser le calcul prédictif sur une unique section transversale donnée de la nervure d'emboîtement, par exemple celle qui est la plus susceptible d'être rognée, puis de refuser ou d'accepter le biseautage de la lentille selon que cette section transversale donnée de la nervure d'emboîtement présente une forme proche ou éloignée de la forme initialement désirée. Pour la mise en oeuvre de cette variante, la première étape pourrait d'ailleurs consister en l'acquisition non pas de l'ensemble de la consigne de déplacement initiale CONS1, mais d'une partie seulement de cette consigne.

Selon une autre variante, on pourra réaliser les calculs précités sur une partie seulement du contour C1, pour réduire le temps nécessaire à ces calculs.

Plus précisément, comme cela a été exposé supra, l'ampleur du phénomène de rognage de la nervure d'emboîtement 26 varie en fonction de la forme rectiligne ou arrondie du contour C1.

Sur le contour C1 représenté sur la figure 7, les risques de rognage de la nervure d'emboîtement 26 sont donc réduits au niveau des quatre arrondis U1 - U4, mais sont en revanche importants au niveau des deux zones rectilignes T1, T2.

Pour limiter le temps nécessaire au calcul prédictif de la géométrie simulée S de la nervure d'engagement 26, on pourra alors se contenter de réaliser ce calcul dans les seuls tronçons d'intérêt T1, T2 du contour C1 où le rognage risque de provoquer des problèmes de maintien de la lentille ophtalmique dans le cercle correspondant de la monture de lunettes sélectionnée.

Pour cela, entre les première et seconde étapes, on pourra prévoir de sélectionner ces tronçons d'intérêt T1, T2 à partir de trois critères que sont le rayon de courbure du contour C1, la base du verre, et le diamètre de la meule de biseautage 212. Ces tronçons seront alors en outre sélectionnés de manière à être espacés deux à deux d'une longueur en abscisse curviligne supérieure à 20 millimètres.

**Revendications**

1. Procédé de calcul prédictif d'une géométrie simulée ($S_i$) d'au moins une partie d'au moins une section transversale considérée ($Q_i$) d'une nervure d'engagement (26) à ménager sur le chant (23) d'une lentille ophtalmique (20) et résultant du biseautage du chant (23) de cette lentille ophtalmique (20) au moyen d'une meule de biseautage (212) tournant autour d'un axe de rotation (A6) dont le déplacement relatif par rapport à la lentille ophtalmique (20) est piloté suivant une consigne de déplacement initiale (CONS1), comportant les étapes suivantes :

   a) obtenir au moins une partie de ladite consigne de déplacement initiale (CONS1) permettant de former au moins une portion de ladite nervure d'engagement (26),
   b) déterminer une première approximation ($S_{ii}$) de la géométrie d'au moins une partie de ladite section transversale considérée ($Q_i$) de la nervure d'engagement (26), déduite de l'intersection entre la meule de biseautage (212) et la lentille ophtalmique (20) lorsque la meule de biseautage (212) est située en une première position ($Pos_i$) de sa consigne de déplacement initiale (CONS1),
   c) déterminer une seconde approximation ($S_{ii}$) de la géométrie d'au moins une partie de ladite section transversale considérée ($Q_i$) de la nervure d'engagement (26), déduite de l'intersection entre la meule de biseautage (212) et la lentille ophtalmique (20) lorsque la meule de biseautage (212) est située en une seconde position ($Pos_j$) de sa consigne de déplacement initiale (CONS1), distincte de sa première position ($Pos_i$),
   d) déterminer l'intersection entre lesdites première et seconde approximations ($S_{ii}$, $S_{ij}$) de la géométrie de ladite section transversale considérée ($Q_i$) de la nervure d'engagement (26),
   e) déduire de l'intersection déterminée à l'étape d) la géométrie simulée ($S_i$) de ladite section transversale considérée ($Q_i$) de la nervure d'engagement (26).

2. Procédé selon la revendication 1, dans lequel ladite première position ($Pos_i$) de la meule de biseautage (212) correspond à celle dans laquelle son axe de rotation (A6) s'étend dans le plan ($R_i$) de ladite section transversale considérée ($Q_i$).

3. Procédé selon l'une des revendications 1 et 2, comportant des étapes supplémentaires consistant à déterminer des approximations supplémentaires ($S_{ij}$) de la géométrie de ladite section transversale considérée ($Q_i$) de la nervure d'engagement (26), déduites de l'intersection entre la meule de biseautage (212) et la lentille ophtalmique (20) lorsque la meule de biseautage (212) est située dans d'autres positions ($Pos_j$) de sa consigne de déplacement initiale (CONS1), distinctes desdites première et seconde positions ($Pos_i$, $Pos_j$), et dans lequel à l'étape d), on détermine l'intersection entre l'ensemble des différentes approximations ($S_{ii}$, $S_{ij}$) de la géométrie de ladite section transversale considérée ($Q_i$) de la nervure d'engagement (26).

4. Procédé selon les revendications 2 et 3, dans lequel les approximations supplémentaires ($S_{ij}$) de la géométrie de ladite section transversale considérée ($Q_i$) de la nervure d'engagement (26) sont effectuées pour des positions de la meule de biseautage (212) exclusivement situées sur la consigne de déplacement initiale (CONS1) de part et d'autre de la première position ($Pos_i$), à l'intérieur d'une portion de simulation ($T_i$) présentant une longueur de simulation ($L_i$) déterminée.

5. Procédé selon la revendication 4, dans lequel la longueur de simulation ($L_i$) est inférieure à 20 millimètres en abscisse curviligne.

6. Procédé de calcul prédictif d'une géométrie simulée (S) d'au moins une partie d'une nervure d'engagement (26) à ménager sur le chant (23) d'une lentille ophtalmique (20), comportant une pluralité de répétitions du procédé de calcul prédictif selon l'une des revendications 1 à 5 pour calculer les géométries simulées ($S_i$) de différentes sections transversales considérées ($Q_i$) de ladite au moins une partie de la nervure d'engagement (26).

7. Procédé selon la revendication 6, dans lequel lesdites premières positions ($Pos_i$) de la meule de biseautage (212) associées aux différentes sections transversales considérées ($Q_i$) sont exclusivement regroupées sur des tronçons d'intérêt (T1, T2) prédéterminés de la consigne de déplacement initiale (CONS1).

8. Procédé selon la revendication 7, dans lequel les tronçons d'intérêt (T1, T2) sont ceux sur lesquels la consigne de déplacement initiale (CONS1) de la meule de biseautage (212) satisfait à une loi fonction du rayon de courbure de la consigne de déplacement initiale (CONS1) et du diamètre de la meule de biseautage (212).

9. Procédé selon l'une des revendications 7 et 8, dans lequel les tronçons d'intérêt (T1, T2) sont espacés deux à deux d'une longueur d'abscisse curviligne supérieure à 20 millimètres.

10. Méthode de biseautage d'une lentille ophtalmique (20) pour ménager sur le chant (23) de cette lentille ophtalmique (20) une nervure d'engagement (26), dans laquelle :

   - on procède au calcul prédictif de la géométrie simulée (S) d'au moins une partie de la nervure d'engagement (26) conformément au procédé selon la revendication 6,
   - on corrige ladite consigne de déplacement initiale (CONS1) de la meule de biseautage (212) en fonction de la géométrie simulée (S) de la nervure d'engagement (26), pour obtenir une consigne de déplacement corrigée (CONS2),
   - on pilote le déplacement de l'axe (A6) de la meule de biseautage (212) relativement à la lentille ophtalmique (20) en suivant cette consigne de déplacement corrigée (CONS2).

11. Méthode de biseautage selon la revendication 10, dans laquelle, pour obtenir la consigne de déplacement corrigée (CONS2) :

   - on compare la géométrie simulée (S) de la nervure d'engagement (26) avec la consigne de déplacement initiale (CONS1),
   - on corrige, en fonction du résultat de cette comparaison, la consigne de déplacement initiale (CONS1).

12. Méthode de biseautage selon la revendication 10, dans laquelle, pour obtenir la consigne de déplacement corrigée (CONS2) :

   - on acquiert une modélisation géométrique d'un drageoir d'une monture de lunettes dans laquelle la lentille ophtalmique (20) est destinée à être montée après son biseautage,
   - on calcule, pour au moins une section transversale (Qi) de la nervure d'engagement (26), une augmentation de diamètre autour d'un axe de la lentille ophtalmique (20) devant être appliquée à la géométrie simulée (S) de la nervure d'engagement (26) pour que cette géométrie simulée (S) ainsi corrigée soit sensiblement tangente au drageoir de la monture de lunettes, et
   - on corrige, en fonction de cette augmentation de diamètre, la consigne de déplacement initiale (CONS1).

13. Méthode de biseautage d'une lentille ophtalmique (20) pour ménager sur le chant (23) de cette lentille ophtalmique (20) une nervure d'engagement (26), dans laquelle :

   - on procède au calcul prédictif de la géométrie simulée (S) d'au moins une partie de la nervure d'engagement (26) conformément au procédé selon la revendication 6,
   - on refuse ou on accepte le biseautage de la lentille ophtalmique (20) avec la meule de biseautage (212) et sa consigne de déplacement initiale (CONS1), en fonction de la géométrie simulée (S) de la nervure d'engagement (26).

14. Méthode de biseautage selon la revendication 13, dans laquelle, pour au moins une section transversale ($Q_i$) de la nervure d'engagement (26):

   - on détermine un écart ou un rapport entre l'aire de la première approximation ($S_{ii}$) de la géométrie de la section transversale considérée et l'aire de la géométrie simulée ($S_i$) de la section transversale considérée ($Q_i$),

- on compare cet écart ou ce rapport avec une valeur seuil, et
- on refuse ou on accepte le biseautage de la lentille ophtalmique (20) avec la meule de biseautage (212) et sa consigne de déplacement initiale (CONS1), en fonction du résultat de cette comparaison.

**15.** Méthode de biseautage selon l'une des revendications 13 et 14, dans laquelle, après avoir refusé le biseautage avec la meule de biseautage (212) et sa consigne de déplacement initiale (CONS1), on procède au biseautage de la lentille ophtalmique (20) avec un autre outil de plus petit diamètre ou avec une autre machine d'usinage procurant à la meule de biseautage (121) au moins un degré de liberté de mouvement supplémentaire.

**Claims**

**1.** A predictive calculation method for calculating a simulated shape ($S_i$) of at least a portion of at least one cross-section ($Q_i$) under consideration of an engagement ridge (26) that is to be arranged on the edge face (23) of an ophthalmic lens (20) and that is to result from beveling the edge face (23) of said ophthalmic lens (20) by means of a beveling grindwheel (212) rotating about an axis of rotation (A6), with movement thereof relative to the ophthalmic lens (20) being driven in application of an initial path setting (CONS1), the method comprising the following steps:

a) obtaining at least a portion of said initial path setting (CONS1) making it possible to form at least a fraction of said engagement ridge (26);

b) determining a first approximation ($S_{ii}$) of the shape of at least a portion of said cross-section ($Q_i$) under consideration of the engagement ridge (26), the approximation being deduced from the intersection between the beveling grindwheel (212) and the ophthalmic lens (20) when the beveling grindwheel (212) is situated in a first position ($Pos_i$) of its initial path setting (CONS1);

c) determining a second approximation ($S_{ij}$) of the shape of at least a portion of said cross-section ($Q_i$) under consideration of the engagement ridge (26), the approximation being deduced from the intersection between the beveling grindwheel (212) and the ophthalmic lens (20) when the beveling grindwheel (212) is situated at a second position ($Pos_j$) of its initial path setting (CONS1), distinct from its first position ($Pos_i$);

d) determining the intersection between first and second approximations ($S_{ii}$, $S_{ij}$) of the shape of said cross-section ($Q_i$) under consideration of the engagement ridge (26); and

e) deducing from the intersection determined in step d), the simulated shape ($S_i$) of said cross-section ($Q_i$) under consideration of the engagement ridge (26).

**2.** A method according to claim 1, wherein said first position ($Pos_i$) of the beveling grindwheel (212) corresponds to the position in which its axis of rotation (A6) extends in the plane ($R_i$) of said cross-section ($Q_i$) under consideration.

**3.** A method according to any one of claims 1 and 2, including additional steps consisting in determining additional approximations ($S_{ij}$) of the shape of said cross-section ($Q_i$) under consideration of the engagement ridge (26), said approximations being deduced from the intersection between the beveling grindwheel (212) and the ophthalmic lens (20) when the beveling grindwheel (212) is situated in other positions ($Pos_j$) of its initial path setting (CONS1) that are distinct from said first and second positions ($Pos_i$, $Pos_j$), and in step d), in determining the intersections between all of the various approximations ($S_{ii}$, $S_{ij}$) of the shape of said cross-section ($Q_i$) under consideration of the engagement ridge (26).

**4.** A method according to claim 2 and claim 3, wherein the additional approximations ($S_{ij}$) of the shape of said cross-section ($Q_i$) under consideration of the engagement ridge (26) are made for positions of the beveling grindwheel (212) that are situated exclusively on the initial path setting (CONS1) on either side of the first position ($Pos_i$) within a simulation portion ($T_i$) presenting a determined simulation length ($L_i$).

**5.** A method according to claim 4, wherein the simulation length ($L_i$) is less than 20 millimeters along a curvilinear abscissa.

**6.** A predictive calculation method for calculating a simulated shape (S) of at least a portion of an engagement ridge (26) to be arranged on the edge face (23) of an ophthalmic lens (20), the method comprising a plurality of repetitions of the predictive calculation method according to any one of claims 1 to 5 for calculating simulated shapes ($S_i$) of various cross-sections ($Q_i$) under consideration of said at least one portion of the engagement ridge (26).

**7.** A method according to claim 6, wherein said first positions ($Pos_i$) of the beveling grindwheel (212) associated with the various cross-sections ($Q_i$) under consideration are grouped together exclusively on predetermined segments of interest (T1, T2) of the initial path setting (CONS1).

8. A method according to claim 7, wherein the segments of interest (T1, T2) are those on which the initial path setting (CONS1) of the beveling grindwheel (212) satisfies a relationship that is a function of the radius of curvature of the initial path setting (CONS1) and of the diameter of the beveling grindwheel (212).

9. A method according to claim 7 or claim 8, wherein the segments of interest (T1, T2) are spaced apart in pairs along a curvilinear abscissa by a length that is greater than 20 millimeters.

10. A method of beveling an ophthalmic lens (20) for arranging an engagement ridge (23) on the edge face (26) of said ophthalmic lens (20), the method comprising:

   · proceeding with the predictive calculation of the simulated shape (S) of at least a portion of the engagement ridge (26) in accordance with the method according to claim 6;
   · correcting said initial path setting (CONS1) for the beveling grindwheel (212) as a function of the simulated shape (S) of the engagement ridge (26) so as to obtain a corrected path setting (CONS2); and
   · driving the movement of the axis (A6) of the beveling grindwheel (212) relative to the ophthalmic lens (20) while following said corrected path setting (CONS2).

11. A beveling method according to claim 10, comprising, in order to obtain the corrected path setting (CONS2):

   · comparing the simulated shape (S) of the engagement ridge (26) with the initial path setting (CONS1); and
   · as a function of the result of said comparison, correcting the initial path setting (CONS1).

12. A beveling method according to claim 10, comprising, in order to obtain the corrected path setting (CONS2):

   · acquiring a geometric model of a bezel of an eyeglass frame in which the ophthalmic lens (20) is to be mounted after beveling;
   · for at least one cross-section ($Q_i$) of the engagement ridge (26), calculating a diameter increase about an axis of the ophthalmic lens (20) for application to the simulated shape (S) of the engagement ridge (26) so that said simulated shape (S) as corrected in this way is substantially tangential to the bezel of the eyeglass frame; and
   · as a function of said diameter increase, correcting the initial path setting (CONS1).

13. A method of beveling an ophthalmic lens (20) to arrange an engagement ridge (26) on the edge face (23) of said ophthalmic lens (20), the method comprising:

   · performing the predictive calculation of the simulated shape (S) of at least a portion of the engagement ridge (26) in accordance with the method according to claim 6; and
   · refusing or accepting beveling of the ophthalmic lens (20) with the beveling grindwheel (212) and its initial path setting (CONS1) as a function of the simulated shape (S) of the engagement ridge (26).

14. A beveling method according to claim 13, comprising, for at least one cross-section ($Q_i$) of the engagement ridge (26):

   · determining a difference or a ratio between the area of the first approximation ($S_{ii}$) of the shape of the cross-section under consideration and the area of the simulated shape ($S_i$) of the cross-section ($S_i$) under consideration;
   · comparing said difference or said ratio with a threshold value; and
   · refusing or accepting beveling of the ophthalmic lens (20) with the beveling grindwheel (212) and its initial path setting (CONS1) as a function of the result of said comparison.

15. A beveling method according to claim 13 or claim 14, comprising, after refusing beveling using the beveling grindwheel (212) and its initial path setting (CONS1), proceeding with beveling of the ophthalmic lens (20) with another tool of smaller diameter or with another machining appliance providing the beveling grindwheel (212) with at least one additional degree of freedom in movement.

**EP 2 399 709 B1**

**Patentansprüche**

1. Prädiktives Berechnungsverfahren einer simulierten Geometrie ($S_i$) von mindestens einem Teil mindestens eines betrachteten Querschnitts ($Q_i$) einer an der Kante (23) eines Brillenglases (20) einzuarbeitenden Einsetzrippe (26), die durch das Facettieren der Kante (23) dieses Brillenglases (20) mit einem Facettenschleifer (212) erzielt wird, der sich um eine Rotationsachse (A6) dreht, deren relative Bewegung in Bezug zum Brillenglas (20) gemäß einer ursprünglichen Bewegungsvorgabe (CONS1) gesteuert wird, wobei das Verfahren folgende Schritte umfasst:

   a) mindestens einen Teil der ursprünglichen Bewegungsvorgabe (CONS1) erhalten, wodurch mindestens ein Abschnitt der Einsetzrippe (26) gebildet werden kann,
   b) eine erste Annäherung ($S_{ii}$) der Geometrie von mindestens einem Teil des betrachteten Querschnitts ($Q_i$) der Einsetzrippe ermitteln, die von der Schnittlinie zwischen dem Facettenschleifer (212) und dem Brillenglas (20) abgeleitet wird, wenn sich der Facettenschleifer (212) in einer ersten Position ($Pos_i$) seiner ursprünglichen Bewegungsvorgabe (CONS1) befindet,
   c) eine zweite Annäherung ($S_{ii}$) der Geometrie von mindestens einem Teil des betrachteten Querschnitts ($Q_j$) der Einsetzrippe (26) ermitteln, die von der Schnittlinie zwischen dem Facettenschleifer (212) und dem Brillenglas (20) abgeleitet wird, wenn sich der Facettenschleifer (212) in einer zweiten Position ($Pos_j$) seiner ursprünglichen Bewegungsvorgabe (CONS1) befindet, die sich von seiner ersten Position ($Pos_i$) unterscheidet,
   d) die Schnittlinie zwischen der ersten und der zweiten Annäherung ($S_{ii}$, $S_{ij}$) der Geometrie des betrachteten Querschnitts ($Q_i$) der Einsetzrippe (26) ermitteln,
   e) von der im Schritt d) ermittelten Schnittlinie die simulierte Geometrie ($S_i$) des betrachteten Querschnitts ($Q_i$) der Einsetzrippe (26) ableiten.

2. Verfahren nach Anspruch 1, bei dem die erste Position ($Pos_i$) des Facettenschleifers (212) der Position entspricht, in der sich seine Rotationsachse (A6) in der Ebene ($R_i$) des betrachteten Querschnitts ($Q_i$) erstreckt.

3. Verfahren nach einem der Ansprüche 1 und 2, das zusätzliche Schritte umfasst, die darin bestehen, zusätzliche Annäherungen ($S_{ij}$) der Geometrie des betrachteten Querschnitts ($Q_i$) der Einsetzrippe (26) zu ermitteln, die von der Schnittlinie zwischen dem Facettenschleifer (212) und dem Brillenglas (20) abgeleitet werden, wenn sich der Facettenschleifer (212) in anderen Positionen ($Pos_j$) seiner ursprünglichen Bewegungsvorgabe (CONS1) befindet, die sich von der ersten und zweiten Position ($Pos_i$, $Pos_j$) unterscheiden, und bei dem man im Schritt d) die Schnittlinie zwischen allen unterschiedlichen Annäherungen ($S_{ii}$, $S_{ij}$) der Geometrie des betrachteten Querschnitts ($Q_i$) der Einsetzrippe (26) ermittelt.

4. Verfahren nach Ansprüche 2 und 3, bei dem die zusätzlichen Annäherungen ($S_{ij}$) der Geometrie des betrachteten Querschnitts ($Q_i$) der Einsetzrippe (26) für Positionen des Facettenschleifers (212) durchgeführt werden, die sich ausschließlich auf der ursprünglichen Bewegungsvorgabe (CONS1) auf beiden Seiten der ersten Position ($Pos_i$) innerhalb eines Simulationsabschnitts ($T_i$) befinden, der eine bestimmte Simulationslänge ($L_i$) aufweist.

5. Verfahren nach Anspruch 4, bei dem die Simulationslänge ($L_i$) in Bogenlänge unter 20 Millimeter beträgt.

6. Prädiktives Berechnungsverfahren einer simulierten Geometrie (S) von mindestens einem Teil einer an der Kante (23) eines Brillenglases (20) einzuarbeitenden Einsetzrippe (26), das eine Vielzahl von Wiederholungen des prädiktiven Berechnungsverfahrens nach einem der Ansprüche 1 bis 5 umfasst, um die simulierten Geometrieformen ($S_i$) von verschiedenen betrachteten Querschnitten ($Q_j$) dieses mindestens einen Teils der Einsetzrippe (26) zu berechnen.

7. Verfahren nach Anspruch 6, bei dem die ersten Positionen ($Pos_i$) des Facettenschleifers (212), die den verschiedenen, betrachteten Querschnitten ($Q_i$) zugeordnet werden, ausschließlich auf vorbestimmten relevanten Abschnitten (T1, T2) der ursprünglichen Bewegungsvorgabe (CONS1) zusammengefasst werden.

8. Verfahren nach Anspruch 7, bei dem die relevanten Abschnitte (T1, T2) diese sind, auf denen die ursprüngliche Bewegungsvorgabe (CONS1) des Facettenschleifers (212) einem Gesetz entspricht, das vom Krümmungsradius der ursprünglichen Bewegungsvorgabe (CONS1) und vom Durchmesser des Facettenschleifers (212) abhängt.

9. Verfahren nach einem der Ansprüche 7 und 8, bei dem die relevanten Abschnitte (T1, T2) jeweils paarweise um eine Bogenlänge von über 20 Millimeter voneinander beabstandet sind.

**10.** Facettiermethode eines Brillenglases (20), um an der Kante (23) dieses Brillenglases (20) eine Einsetzrippe (26) einzuarbeiten, bei der:

- man die simulierte Geometrie (S) von mindestens einem Teil der Einsetzrippe (26) gemäß dem Verfahren nach Anspruch 6 prädiktiv berechnet,
- man die ursprüngliche Bewegungsvorgabe (CONS1) des Facettenschleifers (212) entsprechend der simulierten Geometrie (S) der Einsetzrippe (26) korrigiert, um eine korrigierte Bewegungsvorgabe (CONS2) zu erhalten,
- man die Bewegung der Achse (A6) des Facettenschleifers (212) in Bezug zum Brillenglas (20) steuert und dabei dieser korrigierten Bewegungsvorgabe (CONS2) folgt.

**11.** Facettiermethode nach Anspruch 10, bei der man, um die korrigierte Bewegungsvorgabe (CONS2) zu erhalten:

- die simulierte Geometrie (S) der Einsetzrippe (26) mit der ursprünglichen Bewegungsvorgabe (CONS1) vergleicht,
- entsprechend dem Ergebnis dieses Vergleichs die ursprüngliche Bewegungsvorgabe (CONS1) korrigiert.

**12.** Facettiermethode nach Anspruch 10, bei der man, um die korrigierte Bewegungsvorgabe (CONS2) zu erhalten:

- ein geometrisches Modell eines Einsetzrings einer Brillenfassung erfasst, in die das Brillenglas (20) nach seinem Facettieren eingesetzt werden soll,
- für mindestens einen Querschnitt ($Q_i$) der Einsetzrippe (26) einen größeren Durchmesser um eine Achse des Brillenglases (20) berechnet, der für die simulierte Geometrie (S) der Einsetzrippe (26) angewendet werden muss, damit diese somit korrigierte, simulierte Geometrie (S) deutlich am Einsetzring der Brillenfassung anliegend ist, und
- entsprechend diesem größeren Durchmesser die ursprüngliche Bewegungsvorgabe (CONS1) korrigiert.

**13.** Facettiermethode eines Brillenglases (20), um an der Kante (23) dieses Brillenglases (20) eine Einsetzrippe (26) einzuarbeiten, bei der

- man die simulierte Geometrie (S) von mindestens einem Teil der Einsetzrippe (26) gemäß dem Verfahren nach Anspruch 6 prädiktiv berechnet,
- man das Facettieren des Brillenglases (20) mit dem Facettenschleifer (212) und seine ursprüngliche Bewegungsvorgabe (CONS1) entsprechend der simulierten Geometrie (S) der Einsetzrippe (26) akzeptiert oder ablehnt.

**14.** Facettiermethode nach Anspruch 13, bei der man für mindestens einen Querschnitt ($Q_i$) der Einsetzrippe (26):

- eine Abweichung oder ein Verhältnis zwischen dem Bereich der ersten Annäherung ($S_{ii}$) der Geometrie des betrachteten Querschnitts und dem Bereich der simulierten Geometrie ($S_i$) des betrachteten Querschnitts ($Q_i$) ermittelt,
- diese Abweichung bzw. dieses Verhältnis mit einem Grenzwert vergleicht, und
- das Facettieren des Brillenglases (20) mit dem Facettenschleifer (212) und seine ursprüngliche Bewegungsvorgabe (CONS1) entsprechend dem Ergebnis dieses Vergleichs akzeptiert oder ablehnt.

**15.** Facettiermethode nach einem der Ansprüche 13 und 14, bei der man nach dem Ablehnen des Facettierens mit dem Facettenschleifer (212) und seiner ursprünglichen Bewegungsvorgabe (CONS1) das Brillenglas (20) mit einem anderen Werkzeug mit kleinerem Durchmesser oder mit einer anderen Bearbeitungsmaschine facettiert, die dem Facettenschleifer (121) mindestens ein zusätzliches Maß an Bewegungsfreiraum einräumt.

EP 2 399 709 B1

Fig.1

C1 · 21

20 · 22 · Z · 23

ALPHA$_i$

Z

Q$_i$

21 · 20

28 · 29 · 26 · 27 · 23

22

R$_i$

Fig.2

17

Fig.3

Fig.9

Fig.4

210

211

27

26

20

213

212

Fig.5

$R_{max}$

$R_{min}$

$O_2$

$Q_i$

$Q_j$

26

210

213

212

211

20

A6

Fig.6

$H_{ijk}$

$S_i$

$H_{iik}$

$P_i$

$E_i$

$S_{ij}$

$S_{ii}$

$\vec{Z}$

Fig.7

$\vec{Y}$

T1

VIII

U4

U1

$O_1$

$\vec{Z}$

$\vec{X}$

C2

C1

U3

T2  U2

$\vec{n_i}$

$\vec{t_i}$

Theta$_i$

Fig.8

$P_i = \begin{Bmatrix} x_i \\ y_i \\ z_i \end{Bmatrix}$

C1

**EP 2 399 709 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2893524
- FR 2926896

- EP 0750172 A